# EUROPEAN PATENT SPECIFICATION

(11) **EP 3 480 092 B1**
(45) Date of publication and mention of the grant of the patent: **25.03.2020**
(21) Application number: 18193928.1
(22) Date of filing: 12.09.2018
(51) Int. Cl.: B62K 5/027, B62K 5/08, B62K 5/10

(54) **STEERING LINKAGE OF VEHICLE**
LENKGESTÄNGE EINES FAHRZEUGS
BIELLETTE DE DIRECTION DE VÉHICULE

(30) Priority: 02.11.2017 TW 106137906
(43) Date of publication of application: 08.05.2019
(73) Proprietor: Kwang Yang Motor Co., Ltd., Kaohsiung City (TW)
(72) Inventor: Ting, Hsin-Chih, Cambridge, CB1 1AH (GB); Lee, Yen-Hsiu, Cambridge, CB1 1AH (GB)
(74) Representative: Horak, Michael

(56) References cited:
- CN-Y- 201 151 444
- TW-A- 201 702 111
- US-A1- 2015 232 147

## Description

### (a) Technical Field of the Invention

The present invention relates generally to a steering linkage of a vehicle, and more particularly to a steering linkage of a vehicle that helps suppress enlargement of a front part of a steering support structure of the vehicle and allows for full utilization of a front-side space of the steering support structure of the vehicle.

### (b) Description of the Prior Art

A vehicle having two front wheels generally relies on a steering linkage provided in front of a steering column to achieve an operation of changing a direction of the two front wheels.

As shown in FIGS. 1 and 2 of Taiwan Patent No. TWI519447, which discloses a vehicle, the patent document provides a structure of a steering linkage **A** having two front wheels; however, the steering linkage A of the patent application is located in front of a steering column **B.** In other words, the steering linkage **A** is arranged more frontward of a vehicle body than the steering column **B.**

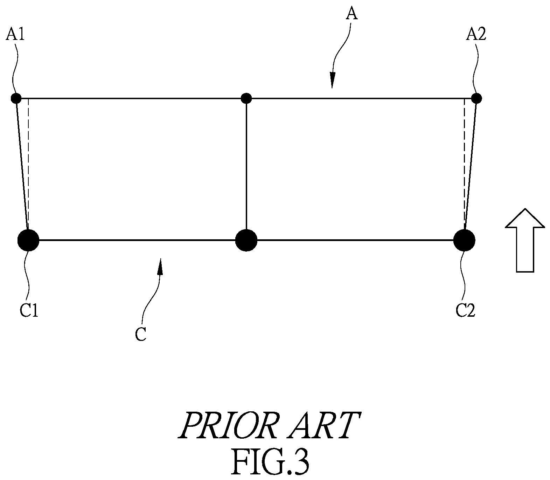

As shown in FIG 3 (in which an arrow is provided to indicate a direction of vehicle head), since the steering linkage **A** of the patent is located in front of the steering column **B,** according to a steering angle differential theorem of Ackermann geometry that is commonly applied to vehicles, a distance defined between left-side and right-side rotation axes **A1**, **A2** of the steering column **A** must be greater than a distance defined between left-side and right-side rotation axes **C1**, **C2** of a tilting device **C** in order to provide a desired steering angle differential; this results in the necessity of enlarging the steering linkage **A** and a sufficient space must be provided in the front side of the vehicle to accommodate the steering angle differential of the steering linkage **A** to ensure a sufficient space of leftward and rightward turning and upward and downward oscillation of the steering linkage **A,** whereby the front (the front panel) of the vehicle has to be enlarged; also, a sufficient space must be preserved in front of the vehicle to accommodate the steering linkage **A** and to provide a space for leftward and rightward turning and upward and downward oscillation of, making it hard for the part of space of the vehicle that is in front of the steering column **B** to be utilized to accommodate other components and thus imposing sever limitations to the front space of the vehicle

Thus, it is an issue to be immediately addressed by a vehicle manufacturer to provide a structure of a steering linkage of a vehicle that helps prevent undesired enlargement of the front part of the vehicle and allows the front space of the vehicle to be sufficiently used to enhance design freedom of the front space of the vehicle. US 2015/232147 discloses the preamble of claim 1.

### SUMMARY OF THE INVENTION

The primary purpose of the present invention is to provide a steering linkage of a vehicle, which helps overcome the drawback of a conventional vehicle that enlargement must be made for a part in front of a steering support structure of the vehicle due to a steering linkage being arranged in front of the steering support structure of the vehicle.

For such a purpose, the general technical solution adopted in claim 1 of this application provides a steering linkage of a vehicle, wherein the vehicle comprises a frame unit, the frame unit being provided, in a front side thereof, with a steering support structure, the steering support structure being provided with a tilting mechanism and a steering linkage pivotally mounted thereto, the steering support structure being provided with a steering column penetrating therethrough; the tilting mechanism comprising an upper crossbar that is pivotally connected to the steering support structure of the frame unit, a lower crossbar that is pivotally connected to the steering support structure and located below the upper crossbar, and a right side bar and a left side bar pivotally connected to two ends of the upper crossbar, the lower crossbar having two ends respectively and pivotally connected to the right side bar and the left side bar; a right support structure connected to the right side bar and comprising right shock absorber, a left support structure connected to the left side bar and comprising a left shock absorber, a central support structure connected to a lower end of the steering column, a steering linkage being connected to the left and right support structures and the central support structure, the steering linkage being pivotally connected to the left and right support structures and the central support structure, the steering linkage being located on a rear side of the steering support structure and located below the lower crossbar.

For such a purpose, the general technical solution adopted in claim 2 of this application provides a steering linkage of a vehicle, wherein the steering linkage comprises a first pull bar and a second pull bar, the first pull bar being pivotally connected to the right support structure and the central support structure, the second pull bar being pivotally connected to the left support structure and the central support structure.

For such a purpose, the general technical solution adopted in claim 3 of this application provides a steering linkage of a vehicle, wherein one side of the first pull bar and one side of the second pull bar are pivotally connected, with a common axis, to the central support structure.

For such a purpose, the general technical solution adopted in claim 4 of this application provides a steering linkage of a vehicle, wherein the central support structure comprises a central connection board, the central connection board comprising a central connection part; the right support structure comprises a right connection board, the right connection board comprising a right connection part; the left support structure comprises a left connection board, the left connection board comprising a left connection part; the first pull bar and the second pull bar are pivotally connected to the right connection part, the central connection part), and the left connection part by first, second, and third pivoting members.

For such a purpose, the general technical solution adopted in claim 5 of this application provides a steering linkage of a vehicle, wherein the pivoting member each comprise a pivoting part and an axle bar; the first pull bar and the second pull bar are pivotally connected to the pivoting parts in an upward-downward direction of a vehicle body, the axle bars being pivotally connected to the right connection part, the central connection part, and the left connection part in a frontward-rearward direction of the vehicle body, so that the pivoting connection members are each a shaft rotatable in the upward-downward direction and the frontward-rearward direction.

For such a purpose, the general technical solution adopted in claim 6 of this application provides a steering linkage of a vehicle, wherein the upper crossbar is arranged in a pairwise form of left and right elements that are pivotally connected, in a manner of being commonly fixed, to the steering support structure, such that the upper crossbar of the pairwise form of left and right elements is pivotally connected, in a manner of being coaxial in the frontward-rearward direction of the vehicle, to the steering support structure.

For such a purpose, the general technical solution adopted in claim 7 of this application provides a steering linkage of a vehicle, wherein the pivoting members each comprise a pivoting part and an axle bar; pivoting part axis lines of the pivoting parts of the first and third pivoting members and axle bar axis lines of the axle bars have leftward and rightward position differences that are arranged as position differences in inward directions, the pivoting part axis lines being arranged to shaft further toward the steering support structure than the axle bar axis lines.

For such a purpose, the general technical solution adopted in claim 8 of this application provides a steering linkage of a vehicle, wherein the steering linkage is located above right and left front wheels.

For such a purpose, the general technical solution adopted in claim 9 of this application provides a steering linkage of a vehicle, wherein a pivoting part axis line of the pivoting part of the second pivoting member is arranged in a manner of showing no position difference with respect to an axle bar central axis line of the axle bar.

An effect that the general technical solution of claim 1 of this application may achieve is that enlargement of a front side of a steering support structure of a vehicle can be suppressed and the space in front of the steering support structure of the vehicle can be fully utilized.

An effect that the general technical solution of claim 2 of this application may achieve is that an arrangement of a steering linkage is made simplified.

An effect that the general technical solution of claim 3 of this application may achieve is that an overall width of a steering linkage is reduced and design freedom of the steering linkage is improved.

An effect that the general technical solution of claim 4 of this application may achieve is that rotatability of a steering linkage is improved.

An effect that the general technical solution of claim 5 of this application may achieve is that dual direction rotatability and control of a steering linkage are improved and a steering angle of a vehicle and a tilting degree of the vehicle are increased.

An effect that the general technical solution of claim 6 of this application may achieve is that asssembleability and controllability of a tilting mechanism are enhanced.

An effect that the general technical solution of claim 7 of this application may achieve is that an overall length of a steering linkage is effectively reduced.

An effect that the general technical solution of claim 8 of this application may achieve is that there is more sufficient space to help prevent interference of a steering linkage and front wheels.

An effect that the general technical solution of claim 9 of this application may achieve is that smoothness of rotation of a steering linkage 3 is enhanced.

### BRIEF DESCRIPTION OF THE DRAWINGS

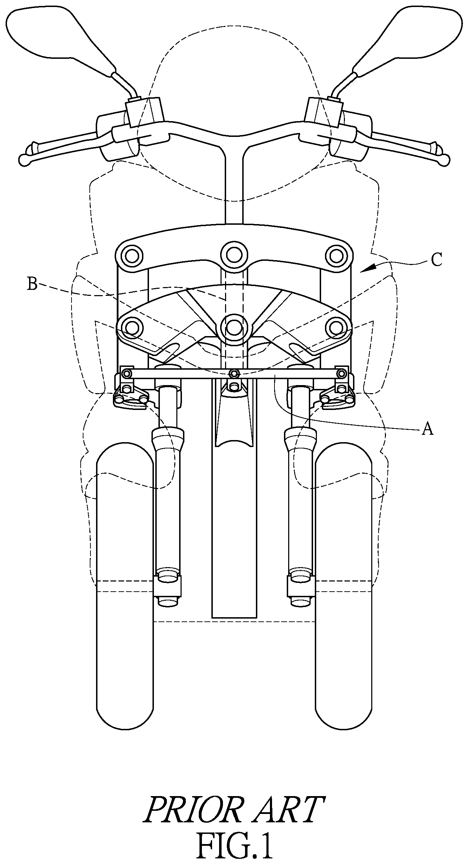

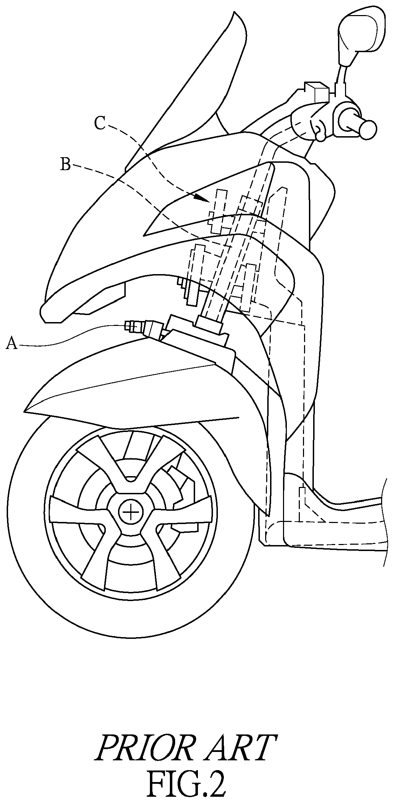

FIGS. 1 and 2 show a vehicle of TWI519447.
FIG 3 is a schematic view illustrating a steering linkage and a tilting device of prior art that form Ackermann geometry.
FIG 4 is a schematic view illustrating a front part of a vehicle according to the present invention.
FIG 5 is a perspective view showing a tilting device and a steering mechanism of the vehicle according to the present invention.
FIG 6 is a perspective view showing a steering linkage of the vehicle according to the present invention.
FIG 7 is a top plan view showing pivoting members of the steering linkage according to the present invention.
FIG 8 is a schematic view illustrating the steering linkage and the tilting device of the present invention form Ackermann steering geometry.

### DETAILED DESCRIPTION OF THE PREFERRED EMBODIMENTS

To help the reader to readily understand the structure of the present invention and the efficacy that may be achieved, a description will be given below with reference to the attached drawings.

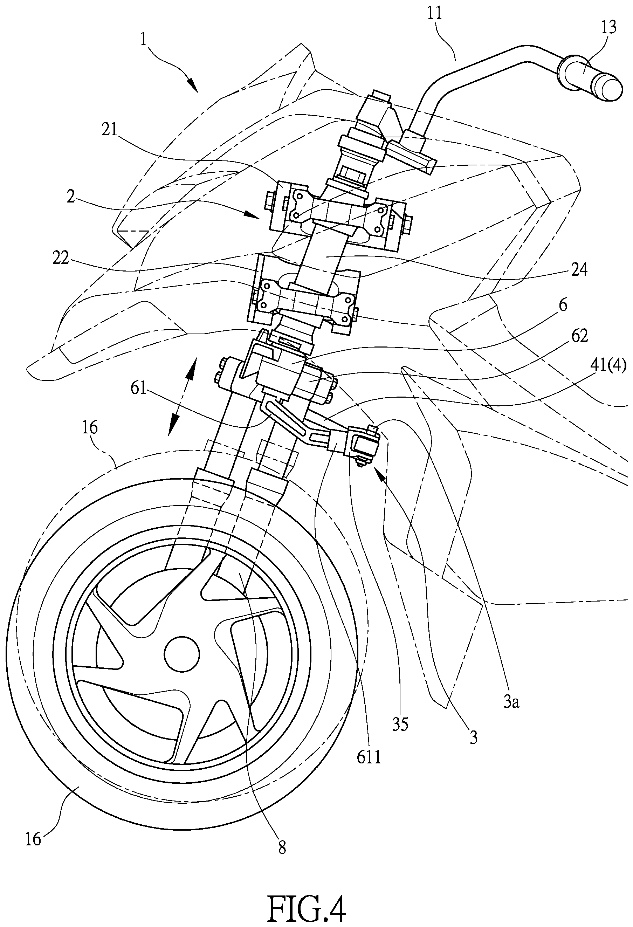

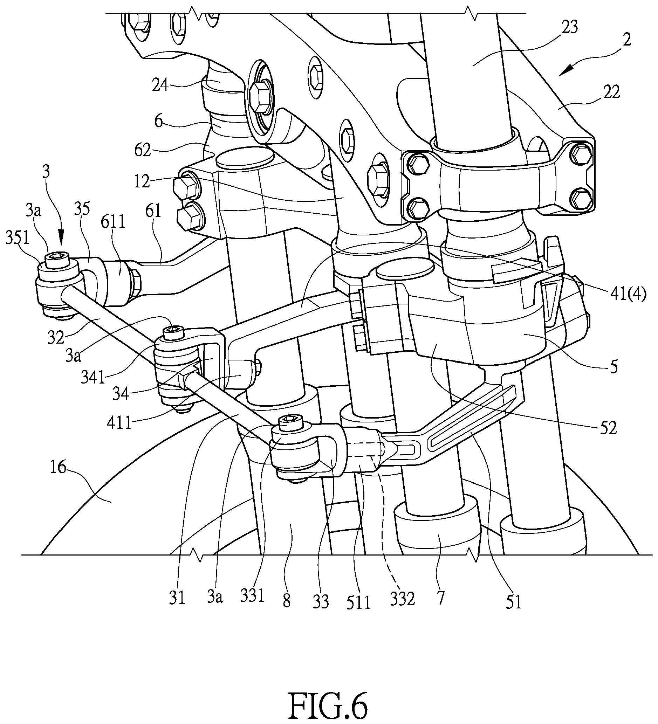

As shown in FIGS. 4, 5, and 6, the vehicle 1 at least comprises a frame unit 11. The frame unit 11 is provided, in a front side thereof (the front side being in the direction of a vehicle head), with a steering support structure 12. The steering support structure 12 is provided with a tilting mechanism 2 and a steering linkage 3. The steering support structure 12 is provided thereon with a steering handlebar 13. The steering handlebar 13 has a lower end that comprises a steering column 14. The steering column 14 is penetrated, from above the steering support structure 12, into the steering support structure 12. The steering column 14 has a lower end extending outside a lower end of the steering support structure 12. A part of the steering column 14 that extends outside the lower end of the steering support structure 12 is provided with a central support structure 4. The central support structure 4 is connected to a central connection board 41. The central connection board 41 is provided thereon with a central connection part 411.

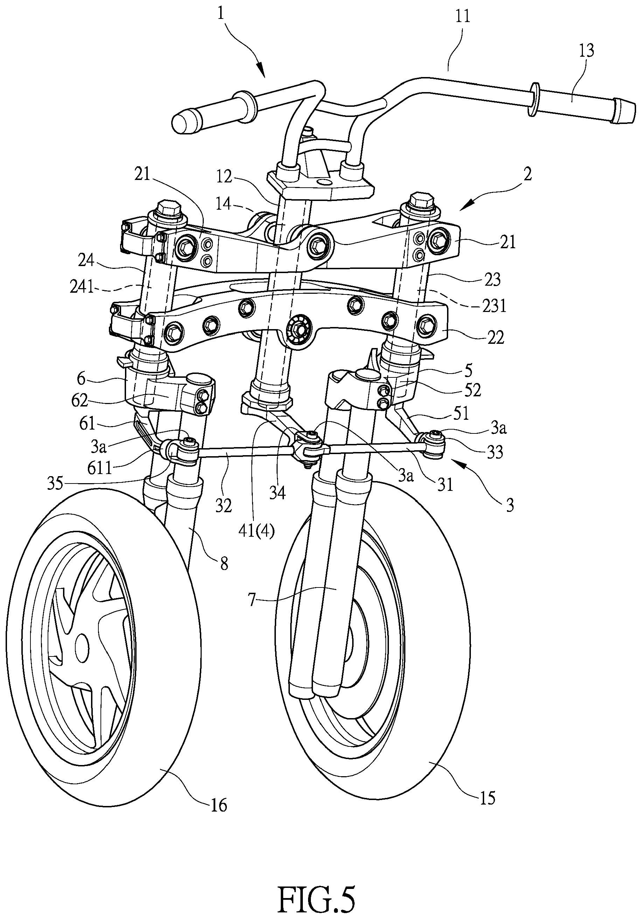

As shown in FIGS. 4, 5, and 6, the tilting mechanism 2 comprises an upper crossbar 21 that is pivotally connected to the steering support structure 12, a lower crossbar 22 that is pivotally connected to the steering support structure 12 and is located below the upper crossbar 21, a right side bar 23 that is pivotally connected to the upper crossbar 21 and the lower crossbar 22 ("right" and "left" as used hereinafter respectively referring to the sides corresponding to the right hand and the left hand of a driver sitting on a vehicle body, and "right side" being the right hand side of FIG 5) and a left side bar 24 that is pivotally connected to the upper crossbar 21 and the lower crossbar 22 ("left side" being the left hand side of FIG 5).

As shown in FIGS. 4, 5, and 6, the upper crossbar 21 of the tilting mechanism 2 is arranged, in pairwise form of a left element and a right element, to be pivotally connected to the steering support structure 12; more specifically, the pair of left and right elements of the upper crossbar 21 are pivotally connected to the steering support structure 12, in a way of being commonly fixed, and the pair of left and right elements of the upper crossbar 21 are pivotally connected to the steering support structure 12 in a manner of being coaxial with a frontward-rearward direction of the vehicle 1; the upper crossbar 21 is pivotally connected, as being extended in a leftward-rightward direction of the vehicle 1, with upper sides of the right side bar 23 and the left side bar 24.

As shown in FIGS. 4, 5, and 6, the lower crossbar 22 of the tilting mechanism 2 is in the form of a frame and is pivotally connected to the steering support structure 12 in a frontward and rearward manner. The lower crossbar 22 pivotally connected to the steering support structure 12 in a manner of being coaxial with the frontward-rearward direction of the vehicle 1. The lower crossbar 22 is pivotally connected with lower sides of the right side bar 23 and the left side bar 24 in the leftward-rightward direction of the vehicle body.

As shown in FIGS. 4, 5, and 6, the right side bar 23 of the tilting mechanism 2 has an upper part that is pivotally connected to the upper crossbar 21 and a lower part that is pivotally connected to the lower crossbar 22; the right side bar 23 is provided with a right side axle 231 to extend through an interior thereof. The right side axle 231 has a lower end connected with a right support structure 5. The right support structure 5 is connection with a right connection board 51 and the right connection bridge 52. The right connection board 51 is provided with a right connection part 511. The right connection board 51 is arranged to extend from a lower end of the right support structure 5 toward a rear side of the vehicle body of the vehicle 1. The right connection bridge 52 is connected to and supports a right shock absorber 7. The right shock absorber 7 has a lower end that supports a right front wheel 15.

As shown in FIGS. 4, 5, and 6, the left side bar 24 of the tilting mechanism 2 has an upper part that is pivotally connected to the upper crossbar 21 and a lower part that is pivotally connected to the lower crossbar 22; the left side bar 24 is provided with a left side axle 241 to extend through an interior thereof. The left side axle 241 has a lower end connection with a left support structure 6. The left support structure 6 is connection with a left connection board 61 and the left connection bridge 62. The left connection board 61 is provided with a left connection part 611. The left connection board 61 is arranged to extend from a lower end of the left support structure 6 toward a rear side of the vehicle body of the vehicle 1. The left connection bridge 62 is connected to and supports a left shock absorber 8. The left shock absorber 8 has a lower end that supports a left front wheel 16.

As shown in FIGS. 4, 5, and 6, by means of the upper crossbar 21 being pivotally connected to an upper part of the steering support structure 12, the lower crossbar 22 being pivotally connected to a lower part of the steering support structure 12, the right side bar 23 having upper and lower sides respectively and pivotally connected to the upper crossbar 21 and the lower crossbar 22, and the left side bar 24 having upper and lower sides respectively and pivotally connected to the upper crossbar 21 and the lower crossbar 22, the tilting mechanism 2 forms a frame having a generally parallelogram configuration; as such, the upper crossbar 21 oscillates, with the steering support structure 12 as an oscillation center, with respect to the lower crossbar 22, the right side bar 23, and the left side bar 24, and the lower crossbar 22, oscillates, with the steering support structure 12 as an oscillation center, with respect to the upper crossbar 21, the right side bar 23, and the left side bar 24, and the right side bar 23 and the left side bar 24 oscillate with respect to the upper crossbar 21 and the lower crossbar 22.

As shown in FIGS. 4, 5, 6, and 7, the steering linkage 3 comprises a first pull bar 31 and the second pull bar 32; the first pull bar 31 has a right side (the right hand side of FIG 5) that is pivotally connected by a pivot pin 3a, in an upward-downward direction, to a first pivoting member 33 and the first pivoting member 33 is then pivotally connected, in the frontward-rearward direction of the vehicle body, to the right connection part 511 of the right connection board 51; the first pull bar 31 has a left side (the middle of FIG 5) that is pivotally connected by a pivot pin 3a, in the upward-downward direction of the vehicle body, to a second pivoting member 34 and the second pivoting member 34 is pivotally connected, in the frontward-rearward direction of the vehicle body, to a central connection part 411 of the central connection board 41; the second pull bar 32 has a right side (the middle of FIG 5) that is pivotally connected, together with the left side of the first pull bar 31, by the pivot pin 3a, in the upward-downward direction of the vehicle body, to the second pivoting member 34, and then, the second pivoting member 34 is pivotally connected, in the frontward-rearward direction of the vehicle body, to the central connection part 411 of the central connection board 41, or more specifically, the right side of the second pull bar 32 and the left side of the first pull bar 32 being commonly and pivotally connected to the central connection part 411 of the central connection board 41; the second pull bar 32 has a left side (the left hand side of FIG 5) that is pivotally connected by a pivot pin 3a, in the upward-downward direction of the vehicle body, to a third pivoting member 35 and the third pivoting member 35 is then pivotally connected, in the frontward-rearward direction of the vehicle body, to a left connection part 611 of the left connection board 61; through the above-described pivotal arrangement, the first pull bar 31 and the second pull bar 32 of the steering linkage 3 are pivotally connected to a rear side of the steering support structure 12 so that the steering linkage 3 is arranged rearward of the steering support structure 12 at a location closer to the rear side of the vehicle body and is located below the lower crossbar 22 and above the right front wheel 15 and the left front wheel 16 to thereby help suppress enlargement of a front part of the steering support structure 12 of the vehicle 1.

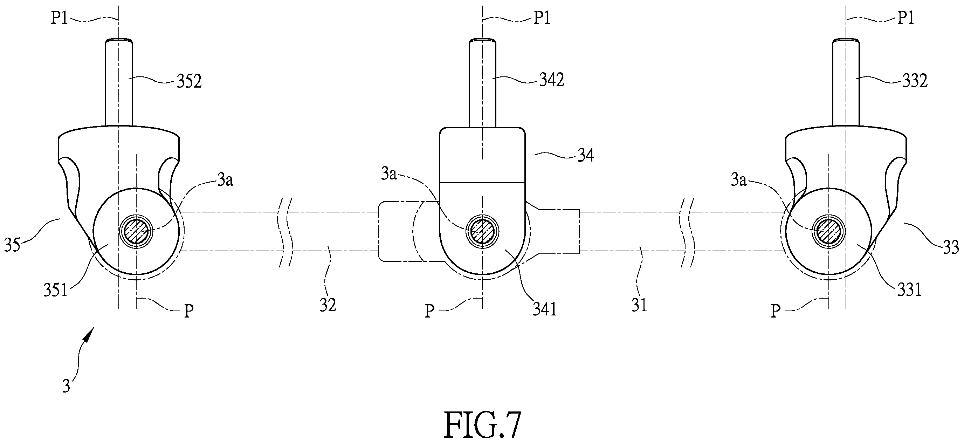

As shown in FIG 7, the first pivoting member 33, the second pivoting member 34, and the third pivoting member 35 are each a rotatable shaft; the first pivoting member 33 comprises a pivoting part 331 and the pivoting part 331 is extended in an opposite side to form an axle bar 332; the second pivoting member 34 comprises a pivoting part 341 and the pivoting part 341 is extended in an opposite side to form an axle bar 342; the third pivoting member 35 comprises a pivoting part 351 and the pivoting part 352 is extended in an opposite side to form an axle bar 352; the first pivoting member 33 is arranged to have the pivot pin 3a to insert, in the upward-downward direction of the vehicle body 1, into the pivoting part 331, and the axle bar 332 of the first pivoting member 33 is pivotally connected, in the frontward-rearward direction of the vehicle body 1, to the right connection part 511 of the right connection board 51, so as to provide the first pivoting member 33 with rotation axes in both the upward-downward direction and the frontward-rearward direction; the second pivoting member 34 is arranged to have the pivot pin 3a to insert, in the upward-downward direction of the vehicle body 1, into the pivoting part 341, and the axle bar 342 of the second pivoting member 34 is pivotally connected, in the frontward-rearward direction of the vehicle body 1, to the central connection part 411 of the central connection board 41 so as to provide the second pivoting member 34 with rotation axes in both the upward-downward direction and the frontward-rearward direction; the third pivoting member 35 is arranged to have the pivot pin 3a to insert, in the upward-downward direction of the vehicle body 1, into the pivoting part 351, and the axle bar 352 of the third pivoting member 35 is pivotally connected, in the frontward-rearward direction of the vehicle body 1, to the left connection part 611 of the left connection board 61 so as to provide the third pivoting member 34 with rotation axes in both the upward-downward direction and the frontward-rearward direction; with the above-described pivotal arrangement of the steering linkage 3, an oscillation angle of the steering linkage 3 and a steering angle can be increased.

As shown in FIGS. 5 and 7, the first pivoting member 33 and the third pivoting member 35 are arranged such that pivoting part axis lines P of the pivoting parts 331, 351 and the axle bar axis lines P1 of the axle bar 332, 352 have leftward and rightward position differences that are arranged as position differences in inward directions, and being more specifically, as viewed from an axis line of the pivot pin 3a, the pivoting part axis line P is parallel to the axle bar axis line P1; further, the pivoting part axis lines P of the pivoting parts 331, 351 of the first pivoting member 33 and the third pivoting member 35 are arranged to shift further in a direction toward the steering support structure 12 than the axle bar axis lines P1 of the axle bars 332, 352; and, a pivoting part axis line P of the pivoting part 341 of the second pivoting member 34 and a axle bar axis line P1 of the axle bar 342 are arranged to have no position difference; as such, an overall length of the steering linkage 3 can be effectively reduced.

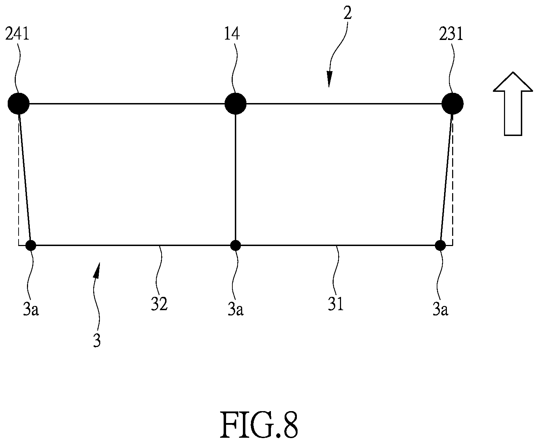

As shown in FIGS. 4, 5, 6, 7, and 8, as the steering linkage 3 is pivotally connected, through the above-described pivotal arrangement, to the rear side of the steering support structure 12, meaning the steering linkage 3 is arranged rearward of the steering support structure 12 at a location closer to the rear side of the vehicle body and is located below the lower crossbar 22; thus, according to a steering angle differential theorem of Ackermann geometry, since the steering linkage 3 is located rearward of the steering support structure 12 at a location closer to the rear side of the vehicle body, when viewed from top side of the steering column 14, the left-side and right-side pivot pins 3a of the steering linkage 3 and the left side axle 241 and the right side axle 231 of the tilting device 2 form Ackermann geometry (as shown in FIG 8, in which an arrow is shown to indicate the direction of vehicle head), wherein the left-side and right-side pivot pins 3a of the steering linkage 3 define a distance that is smaller than a distance defined by the left side axle 241 and the right side axle 231 of the tilting device 2, meaning the left-side and right-side pivot pins 3a of the steering linkage 3 are shifted inward as compared to the left side axle 241 and the right side axle 231 of the tilting device 2 so as to achieve a desired steering angle differential and also to miniaturize the steering linkage 3, whereby on the one hand, there is no need to void the front side of the vehicle 1 to accommodate the steering linkage 3, so that the front side of the vehicle 1 can be a free space for arrangement of parts, such as radiator and headlight, to improve flexibility of design of the front part of the vehicle 1, and on the other hand, the overall length of the steering linkage 3 can be effectively reduce; it is worth noting that the steering linkage 3 is pivotally connected, through the above-described pivotal arrangement, to the rear side of the steering support structure 12, meaning the steering linkage 3 is arranged rearward of the steering support structure 12 at a location closer to the rear side of the vehicle body and is located below the lower crossbar 22 and above the right and left front wheels 15, 16, while the front wheels 15, 16 are pivotally connected to the right shock absorber 7 and the left shock absorber 8 in a manner of being inclined frontward, so that when the front wheels 15, 16 are subjected to cushioning by the right shock absorber 7 and the left shock absorber 8 in the upward-downward direction, since the steering linkage 3 is located rearward of the steering support structure 12 and above the right and left front wheels 15, 16, there is more extra space to help prevent interference of the steering linkage 3 and the front wheels 15, 16.

A first effect that the present invention may achieve with the above-described structure is as follows: The steering linkage 3 is pivotally connected, in a pivotal arrangement, to the rear side of the steering support structure 12, meaning the steering linkage 3 is arranged rearward of the steering support structure 12 at a location closer to the rear side of the vehicle body and is located below the lower crossbar 22; as such, enlargement of the front side of the steering support structure 12 of the vehicle 1 can be suppressed and the space in front of the steering support structure 12 of the vehicle 1 can be fully utilized.

A second effect that the present invention may achieve with the above-described structure is as follows: The steering linkage 3 comprises a first pull bar 31 and a second pull bar 32, and the first pull bar 31 is pivotally connected to the right support structure 5 and the central support structure and the second pull bar 32 is pivotally connected to the left support structure 6 and the central support structure 4; as such, the arrangement of the steering linkage 3 is made simplified.

A third effect that the present invention may achieve with the above-described structure is as follows: One side of the first pull bar 31 and one side of the second pull bar 32 are pivotally connected, along the same axis, to the central support structure 4; as such, an overall width of the steering linkage 3 is reduced and design freedom of the steering linkage 3 is improved.

A fourth effect that the present invention may achieve with the above-described structure is as follows: The central support structure 4 comprises a central connection board 41, and the central connection board 41 comprises a central connection part 411; the right support structure 5 comprises a right connection board 51, and the right connection board 51 comprises a right connection part 511; the left support structure 6 comprises a left connection board 61, and the left connection board 61 comprises a left connection part 611; the first pull bar 31 and the second pull bar 32 are pivotally connected, through the first, second, and third pivoting members 33, 34, 35, to the right connection part 511, the central connection part 411 and the left connection part 611; as such, rotatability of the steering linkage 3 is improved.

A fifth effect that the present invention may achieve with the above-described structure is as follows: The first, second, and third pivoting members 33, 34, 35 each comprise a pivoting part 331, 341, 351 and an axle bar 332, 342, 352; the first pull bar 31 and the second pull bar 32 are pivotally connected, in the upward-downward direction of the vehicle body, to the pivoting part 331, 341, 351 and the axle bars 332, 342, 352 are pivotally connected, in the frontward-rearward direction of the vehicle body, to the right connection part 511, the central connection part 411 and the left connection part 611, so that the pivoting member 33 is made as a rotatable shaft member in both the upward-downward direction and the frontward-rearward direction; as such, dual direction rotatability and control of the steering linkage 3 are improved and a steering angle of the vehicle 1 and a tilting degree of the vehicle 1 are increased.

A sixth effect that the present invention may achieve with the above-described structure is as follows: The upper crossbar 21 is arranged in the pairwise form of left and right elements that are pivotally connected together to the steering support structure 12, such that the pair of left and right elements of the upper crossbar 21 form a pivotal connection, which extends in a manner of being coaxial with the frontward-rearward direction of the vehicle body 1; as such, the asssembleability and controllability of the tilting mechanism 2 are enhanced.

A seventh effect that the present invention may achieve with the above-described structure is as follows: The pivoting members 33, 34, 35 comprise pivoting parts 331, 341, 351 and the axle bars 332, 342, 352; pivoting part axis lines P of the pivoting parts 331, 351 of the first and third pivoting members 33, 35 and the axle bar axis lines P1 of the axle bars 332, 352 are arranged to have leftward and rightward position differences therebetween that are arranged as position differences in inward directions, such that the pivoting parts 331, 351 are shifted more toward the steering support structure 12 than the axle bar 332, 352; as such, an overall length of the steering linkage 3 is effectively reduced.

An eighth effect that the present invention may achieve with the above-described structure is as follows: The steering linkage 3 is located above the right and left front wheels 15, 16; as such, there is more sufficient space to help prevent interference of the steering linkage 3 and the front wheels 15, 16.

A ninth effect that the present invention may achieve with the above-described structure is as follows: The pivoting part axis line P of the pivoting part 341 of the second pivoting member 34 is arranged in a manner of being not shifted in position with respect to the axle bar central axis line P1 of the and the axle bar 342; as such, smoothness of rotation of the steering linkage 3 is enhanced.

## Claims

1. A steering linkage of a vehicle, the vehicle (1) comprising a frame unit (11), the frame unit (11) being provided, in a front side thereof, with a steering support structure (12), the steering support structure (12) being provided with a tilting mechanism (2) and a steering linkage (3) pivotally mounted thereto, the steering support structure (12) being provided with a steering column (14) penetrating therethrough; the tilting mechanism (2) comprising an upper crossbar (21) that is pivotally connected to the steering support structure (12) of the frame unit (11), a lower crossbar (22) that is pivotally connected to the steering support structure (12) and located below the upper crossbar (21), and a right side bar (23) and a left side bar (24) pivotally connected to two ends of the upper crossbar (21), the lower crossbar (22) having two ends respectively and pivotally connected to the right side bar (23) and the left side bar (24); a right support structure (5) connected to the right side bar (23) and comprising right shock absorber (7), a left support structure (6) connected to the left side bar (24) and comprising a left shock absorber (8), a central support structure (4) connected to a lower end of the steering column (14), a steering linkage (3) being connected to the left and right support structures (6, 5) and the central support structure (4), the steering linkage (3) being pivotally connected to the left and right support structures (6, 5) and the central support structure (4), **characterized in that** the steering linkage (3) is located on a rear side of the steering support structure (12) and is located below the lower crossbar (22).

2. The steering linkage of the vehicle according to claim 1, wherein the steering linkage (3) comprises a first pull bar (31) and a second pull bar (32), the first pull bar (31) being pivotally connected to the right support structure (5) and the central support structure (4), the second pull bar (32) being pivotally connected to the left support structure (6) and the central support structure (4).

3. The steering linkage of the vehicle according to claim 2, wherein one side of the first pull bar (31) and one side of the second pull bar (32) are pivotally connected, with a common axis, to the central support structure.

4. The steering linkage of the vehicle according to claim 2, wherein the central support structure (4) comprises a central connection board (41), the central connection board (41) comprising a central connection part (411); the right support structure (5) comprises a right connection board (51), the right connection board (51) comprising a right connection part (511); the left support structure (6) comprises a left connection board (61), the left connection board (61) comprising a left connection part (611); the first pull bar (31) and the second pull bar (32) are pivotally connected to the right connection part (511), the central connection part (411), and the left connection part (611) by first, second, and third pivoting members (33, 34, 35).

5. The steering linkage of the vehicle according to claim 4, wherein the first, second, and third pivoting members (33, 34, 35) each comprise a pivoting part (331, 341, 351) and an axle bar (332, 342, 352); the first pull bar (31) and the second pull bar (32) are pivotally connected to the pivoting parts (331, 341, 351) in an upward-downward direction of a vehicle body, the axle bars (332, 342, 352) being pivotally connected to the right connection part (511), the central connection part (411), and the left connection part (611) in a frontward-rearward direction of the vehicle body, so that the pivoting connection members are each a shaft rotatable in the upward-downward direction and the frontward-rearward direction.

6. The steering linkage of the vehicle according to claim 1, wherein the upper crossbar (21) is arranged in a pairwise form of left and right elements that are pivotally connected, in a manner of being commonly fixed, to the steering support structure (12), such that the upper crossbar (21) of the pairwise form of left and right elements is pivotally connected, in a manner of being coaxial in the frontward-rearward direction of the vehicle, to the steering support structure (12).

7. The steering linkage of the vehicle according to claim 2, wherein the first, second, and third pivoting members (33, 34, 35) each comprise a pivoting part (331, 341, 351) and an axle bar (332, 342, 352); pivoting part axis lines (P) of the pivoting parts (331, 351) of the first and third pivoting members (33, 35) and axle bar axis lines (P1) of the axle bars (332, 352) have leftward and rightward position differences that are arranged as position differences in inward directions, the pivoting part axis lines (P) being arranged to shaft further toward the steering support structure (12) than the axle bar axis lines (P1).

8. The steering linkage of the vehicle according to claim 1, wherein the steering linkage (3) is located above right and left front wheels (15, 16).

9. The steering linkage of the vehicle according to claim 7, wherein a pivoting part axis line (P) of the pivoting part (341) of the second pivoting member (34) is arranged in a manner of showing no position difference with respect to an axle bar central axis line (P1) of the axle bar (342).

## Patentansprüche

1. Lenkgestänge eines Fahrzeugs, wobei das Fahrzeug (1) eine Rahmeneinheit (11) aufweist, wobei die Rahmeneinheit (11) an ihrer Vorderseite eine Lenkstützstruktur (12) aufweist, wobei die Lenkstützstruktur (12) mit einem Kippmechanismus (2) und einem daran schwenkbar angebrachten Lenkgestänge (3) versehen ist, wobei die Lenkstützstruktur (12) mit einer Lenksäule (14) versehen ist, die durch sie hindurchtritt; wobei der Kippmechanismus (2) eine obere Querstange (21) aufweist, die schwenkbar mit der Lenkstützstruktur (12) der Rahmeneinheit (11) verbunden ist, eine untere Querstange (22), die schwenkbar mit der Lenkstützstruktur (12) verbunden ist und sich unter der oberen Querstange (21) befindet, und eine rechte Seitenstange (23) und eine linke Seitenstange (24), die schwenkbar mit zwei Enden der oberen Querstange (21) verbunden sind, wobei die untere Querstange (22) jeweils zwei Enden hat und schwenkbar mit der rechten Seitenstange (23) und der linken Seitenstange (24) verbunden ist; eine rechte Tragstruktur (5), die mit der rechten Seitenstange (23) verbunden ist und einen rechten Stoßdämpfer (7) aufweist, eine linke Tragstruktur (6), die mit der linken Seitenstange (24) verbunden ist und einen linken Stoßdämpfer (8) umfasst, eine zentrale Tragstruktur (4), die mit einem unteren Ende der Lenksäule (14) verbunden ist, ein Lenkgestänge (3), das mit der linken und rechten Tragstruktur (6, 5) und der zentralen Tragstruktur (4) verbunden ist, wobei das Lenkgestänge (3) schwenkbar mit der linken und rechten Tragstruktur (6, 5) und der zentralen Tragstruktur (4) verbunden ist, **dadurch gekennzeichnet, dass** sich das Lenkgestänge (3) an einer Rückseite der Lenkstruktur (12) und unterhalb der unteren Querstange (22) befindet.

2. Lenkgestänge des Fahrzeugs nach Anspruch 1, wobei das Lenkgestänge (3) eine erste Zugstange (31) und eine zweite Zugstange (32) umfasst, wobei die erste Zugstange (31) schwenkbar mit der rechten Tragstruktur (5) und der zentralen Tragstruktur (4) verbunden ist, und die zweite Zugstange (32) schwenkbar mit der linken Tragstruktur (6) und der zentralen Tragstruktur (4) verbunden ist.

3. Lenkgestänge des Fahrzeugs nach Anspruch 2, wobei eine Seite der ersten Zugstange (31) und eine Seite der zweiten Zugstange (32), mit einer gemeinsamen Achse schwenkbar mit der zentralen Tragstruktur verbunden sind.

4. Lenkgestänge des Fahrzeugs nach Anspruch 2, wobei die zentrale Tragstruktur (4) eine zentrale Verbindungsplatte (41) umfasst, wobei die zentrale Verbindungsplatte (41) ein zentrales Verbindungsteil (411) umfasst; die rechte Tragstruktur (5) umfasst eine rechte Verbindungsplatine (51), wobei die rechte Verbindungsplatine (51) ein rechtes Verbindungsteil (511) umfasst; die linke Tragstruktur (6) umfasst eine linke Verbindungsplatine (61), wobei die linke Verbindungsplatine (61) ein linkes Verbindungsteil (611) umfasst; die erste Zugstange (31) und die zweite Zugstange (32) sind schwenkbar mit dem rechten Verbindungsteil (511), dem mittleren Verbindungsteil (411) und dem linken Verbindungsteil (611) durch erste, zweite und dritte Schwenkelemente (33, 34, 35) verbunden.

5. Lenkgestänge des Fahrzeugs nach Anspruch 4, wobei das erste, zweite und dritte Schwenkelement (33, 34, 35) jeweils ein Schwenkteil (331, 341, 351) und eine Achsstange (332, 342, 352) aufweisen; die erste Zugstange (31) und die zweite Zugstange (32) sind schwenkbar mit den Schwenkteilen (331, 341, 351) in einer Aufwärts-Abwärts-Richtung einer Fahrzeugkarosserie verbunden, wobei die Achsstangen (332, 342, 352) schwenkbar mit dem rechten Verbindungsteil (511), dem mittleren Verbindungsteil (411) und dem linken Verbindungsteil (611) in einer Vorwärts-Rückwärts-Richtung der Fahrzeugkarosserie verbunden sind, so dass die schwenkbaren Verbindungselemente jeweils eine Welle sind, die in der Aufwärts-Abwärts-Richtung und der Vorwärts-Rückwärts-Richtung drehbar sind.

6. Lenkgestänge des Fahrzeugs nach Anspruch 1, wobei die obere Querstange (21) in einer paarweisen Form von linken und rechten Elementen angeordnet ist, die schwenkbar auf eine Art und Weise verbunden sind, dass sie gemeinsam an der Lenkstützstruktur (12) befestigt sind, so dass die obere Querstange (21) der paarweisen Form linker und rechter Elemente schwenkbar in einer koaxialen Weise in der Vorwärts-Rückwärts-Richtung des Fahrzeugs mit der Lenkstützstruktur (12) verbunden ist.

7. Lenkgestänge des Fahrzeugs nach Anspruch 2, wobei das erste, zweite und dritte Schwenkelement (33, 34, 35) jeweils ein Schwenkteil (331, 341, 351) und eine Achsstange (332, 342,352) umfassen; Achslinien des schwenkbaren Teils (P) der Schwenkteile (331, 351) des ersten und dritten Schwenkelements (33, 35) und Achsstangenlinien (P1) der Achsstangen (332, 352) weisen nach links und rechts gerichtete Positionsunterschiede auf, die als Positionsunterschiede nach innen gerichtet angeordnet sind, wobei die Achslinien (P) des schwenkbaren Teils so angeordnet sind, dass sie sich weiter in Richtung der Lenkstützstruktur (12) bewegen als die Achsstangenlinien (P1).

8. Lenkgestänge des Fahrzeugs nach Anspruch 1, wobei das Lenkgestänge (3) über dem rechten und linken Vorderrad (15, 16) angeordnet ist.

9. Lenkgestänge des Fahrzeugs nach Anspruch 7, wobei eine Achslinie des schwenkbaren Teils (P) des Schwenkteils (341) des zweiten Schwenkelements (34) auf eine Art angeordnet ist, dass sie keinen Positionsunterschied in Bezug auf eine zentrale Achsstangenlinie (P1) der Achsstange (342) zeigt.

## Revendications

1. Biellette de direction d'un véhicule, le véhicule (1) comprenant une unité de cadre (11), l'unité de cadre (11) étant munie, dans un face avant de celle-ci, d'une structure de support de direction (12), la structure de support de direction (12) étant munie d'un mécanisme de basculement (2) et une biellette de direction (3) montés sur elle de façon pivotante, la structure de support de direction (12) étant munie d'une colonne de direction (14) pénétrant à travers celle-ci ; le mécanisme de basculement (2) comprenant une barre transversale supérieure (21) qui est connectée de façon pivotante à la structure de support de direction (12) de l'unité de cadre (11), une barre transversale inférieure (22) qui est connectée de façon pivotante à la structure de support de direction (12) et située au-dessous de la barre transversale supérieure (21), et une barre de côte droit (23) et une barre de côté gauche (24) connectées de façon pivotante à deux extrémités de la barre transversale supérieure (21), la barre transversale inférieure (22) ayant deux extrémités connectées respectivement et de façon pivotante à la barre de côté droit (23) et à la barre de côté gauche (24) ; une structure de support de droite (5) connectée à la barre de côté droit (23) et comprenant un amortisseur de chocs de droite (7), une structure de support de gauche (6) connectée à la barre de côté gauche (24) et comprenant un amortisseur de chocs de gauche (8), une structure de support centrale (4) connectée à une extrémité inférieure de la colonne de direction (14), une biellette de direction (3) étant connectée aux structures de support de droite et de gauche (6, 5) et à la structure de support centrale (4), la biellette de direction (3) étant connectée de façon pivotante aux structures de support de droite et de gauche (6, 5) et à la structure de support centrale (4), **caractérisée en ce que** la biellette de direction (3) est située sur un côté postérieur de la structure de support de direction (12) et est située au-dessous de la barre transversale inférieure (22).

2. Biellette de direction du véhicule selon la revendication 1, où la biellette de direction (3) comprend une première barre de tirage (31) et une deuxième barre de tirage (32), la première barre de tirage (31) étant connectée de façon pivotante à la structure de support de droite (5) et à la structure de support centrale (4), la deuxième barre de tirage (32) étant connectée de façon pivotante à la structure de support de gauche (6) et à la structure de support centrale (4).

3. Biellette de direction du véhicule selon la revendication 2, où un côté de la première barre de tirage (31) et un côté de la deuxième barre de tirage (32) sont connectés de façon pivotante, avec un axe commun, à la structure de support centrale.

4. Biellette de direction du véhicule selon la revendication 2, où la structure de support centrale (4) comprend un plateau de connexion central (41), le plateau de connexion central (41) comprenant une partie de connexion centrale (411) ; la structure de support de droite (5) comprend un plateau de connexion de droite (51), le plateau de connexion de droite (51) comprenant une partie de connexion de droite (511) ; la structure de support de gauche (6) comprend un plateau de connexion de gauche (61), le plateau de connexion de gauche (61) comprenant une partie de connexion de gauche (611) ; la première barre de tirage (31) et la deuxième barre de tirage (32) sont connectées de façon pivotante à la partie de connexion de droite (511), à la partie de connexion centrale (411), et à la partie de connexion de gauche (611) par des premier, deuxième et troisième éléments pivotants (33, 34, 35).

5. Biellette de direction du véhicule selon la revendication 4, où les premier, deuxième et troisième éléments pivotants (33, 34, 35) comprennent chacun une partie pivotante (331, 341, 351) et une barre d'essieu (332, 342, 352) ; la première barre de tirage (31) et la deuxième barre de tirage (32) sont connectées de façon pivotante aux parties pivotantes (331, 341, 351) dans une direction ascendante-descendante d'un carrosserie de véhicule, les barres d'essieu (332, 342, 352) étant connectées de façon pivotante à la partie de connexion de droite (511), à la partie de connexion centrale (411) et à la partie de connexion de gauche (611) dans une direction vers l'avant-vers l'arrière de la carrosserie du véhicule, de sorte que les éléments de connexion pivotants sont chacun un arbre rotatif dans la direction ascendante-descendante et la direction vers l'avant-vers l'arrière.

6. Biellette de direction du véhicule selon la revendication 1, où la barre transversale supérieure (21) est arrangée dans une forme par paires d'éléments de droite et de gauche qui sont connectés de façon pivotante, de façon à être fixés en commun à la structure de support de direction (12), de telle façon que la barre transversale supérieure (21) de la forme par paires d'éléments de droite et de gauche est connectée de façon pivotante, de façon à être coaxiale dans la direction vers l'avant-vers l'arrière du véhicule à la structure de support de direction (12).

7. Biellette de direction du véhicule selon la revendication 2, où les premier, deuxième et troisième éléments pivotants (33, 34, 35) comprennent chacun une partie pivotante (331, 341, 351) et une barre d'essieu (332, 342, 352) ; les lignes d'axe de partie pivotante (P) des parties pivotantes (331, 351) des premier et troisième éléments pivotants (33, 35) et les lignes d'axe de barre d'essieu (P1) des barres d'essieu (332, 352) ont des différences de position vers la gauche et vers la droite qui sont arrangées comme des différences de position dans des directions vers l'intérieur, les lignes d'axe de partie pivotante (P) étant arrangées pour pivoter davantage vers la structure de support de direction (12) que les lignes d'axe de barre d'essieu (P1).

8. Biellette de direction du véhicule selon la revendication 1, où la biellette de direction (3) est située au-dessus des roues avant de droite et de gauche (15, 16).

9. Biellette de direction du véhicule selon la revendication 7, où une ligne d'axe de partie pivotante (P) de la partie pivotante (341) du deuxième élément pivotant (34) est arrangée de façon à ne présenter aucune différence de position par rapport à une ligne d'axe centrale de barre d'essieu (P1) de la barre d'essieu (342).
